# EUROPEAN PATENT SPECIFICATION

(11) **EP 2 450 406 B1**
(45) Date of publication and mention of the grant of the patent: **14.10.2015**
(21) Application number: 10794209.6
(22) Date of filing: 30.06.2010
(51) Int. Cl.: C09D 127/18, C09D 123/08, C08K 5/07, C08J 3/09, C08J 3/11, C08J 5/18

(54) **FLUORINE-CONTAINING COPOLYMER COMPOSITION AND METHOD FOR PRODUCING SAME**
FLUORIN-HALTIGE COPOLYMER-ZUSAMMENSETZUNG UND HERSTELLUNGSVERFAHREN DAFÜR
COMPOSITION À BASE D'UN COPOLYMÈRE CONTENANT DU FLUOR ET SON PROCÉDÉ DE PRODUCTION

(30) Priority: 01.07.2009 JP 2009156742
(43) Date of publication of application: 09.05.2012
(73) Proprietor: Asahi Glass Company, Limited, Tokyo 100-8405 (JP)
(72) Inventor: NAKANO, Takashi, Tokyo 100-8405 (JP); FUJITA, Tomoyuki, Tokyo 100-8405 (JP); YAMAMOTO, Hiroshi, Tokyo 100-8405 (JP); MORIZAWA, Yoshitomi, Tokyo 100-8405 (JP)
(74) Representative: Müller-Boré & Partner Patentanwälte PartG mbB
(86) International application number: PCT/JP2010/061203
(87) International publication number: WO 2011/002041

(56) References cited:
- WO-A1-2010/044425
- JP-A- 50 138 047
- JP-B- 49 018 623
- US-A- 2 448 952
- US-A- 2 484 483
- US-A- 4 005 157

## Description

### TECHNICAL FIELD

The present invention relates to a fluorocopolymer composition and its production process.

### BACKGROUND ART

A fluororesin is excellent in the solvent resistance, low dielectric properties, a low surface energy, non-adhesiveness and the weather resistance, and accordingly used for various applications for which a general purpose plastic cannot be used. Particularly, an ethylene/tetrafluoroethylene copolymer (hereinafter tetrafluoroethylene will sometimes be referred to as TFE, and an ethylene/tetrafluoroethylene copolymer as ETFE) is a fluororesin excellent in the heat resistance, the flame retardancy, the chemical resistance, the weather resistance, the low friction property, low dielectric properties, the transparency, etc. and is thereby used in a wide range of fields, such as a covering material for a heat resistant electric wire, a corrosion-resistant piping material for a chemical plant, an agricultural plastic greenhouse material, and a mold release film.

However, unlike polyvinylidene fluoride which is soluble in N-methylpyrrolidone and the like, ETFE is usually insoluble in a solvent and cannot be applied to formation of a thin film e.g. by coating, and accordingly its forming method is limited to melt forming such as extrusion, injection molding or powder coating.

Heretofore, an attempt to obtain a solution of ETFE has been reported. An ETFE solution was obtained by using as a solvent a dicarboxylic diester such as diisobutyl adipate, however, the dissolution temperature must be a high temperature of 230°C, 260 to 265°C or 290°C (Patent Documents 1 to 3). Further, an example of using a low molecular weight chlorotrifluoroethylene polymer as a solvent has also been reported, but heating to a temperature in the vicinity of the melting point of the polymer is still required. Further, it is disclosed that the solution can hardly be used for coating since the boiling point of the solvent is high, and that a dispersion liquid obtainable from the solvent loses fluidity in the vicinity of room temperature (Patent Document 4).

On the other hand, an example has been reported that ETFE is utilized for flash spinning using a ketone, a hydrofluorocarbon or the like as a solvent under high temperature and high pressure conditions. However, any attempt is carried out under very high pressure conditions of at least 13 MPa, and accordingly a special apparatus is required, and application other than the aimed purpose is difficult, and for example, it is impossible to apply such an attempt to formation into e.g. a thin film or a film, or to production of a porous material such as a hollow fiber by means of phase separation (Patent Document 5).

Accordingly, examples in the past are hardly easily conductible in practical operation, and an easily handleable technique or method to obtain a solution of ETFE at a relatively low temperature has not been known.

Document US 4 005 157 A discloses compositions comprising 100 parts by weight of E-TFE copolymers (in powder form), 100 to 500 parts by weight of a latent solvent, and 0 to 50 parts by weight of a fluidizing solvent. The latent solvent includes alkoxyl (C₁-C₁₂) esters of aliphatic and aromatic mono- and poly-carboxylic acids, etc., and the fluidizing solvent includes ketones, low boiling esters, etc., which can be regarded as C₆₋₁₀ aliphatic compounds having one carbonyl group.

Document JP S 50 138 047 discloses a dispersion of a TFE/ethylene copolymer containing a TFE/ethylene copolymer and a liquid medium which includes isophorone and diisobutyl ketone. The content of the TFE/ethylene copolymer is 20 to 60 mass-% on the basis of the total weight of the dispersion.

### PRIOR ART DOCUMENTS

### PATENT DOCUMENTS

Patent Document 1: U.S. Patent No. 2,412,960
Patent Document 2: U.S. Patent No. 2,448,952
Patent Document 3: U.S. Patent No. 2,484,483
Patent Document 4: U.S. Patent No. 4,933,388
Patent Document 5: JP-A-2000-503731

### DISCLOSURE OF INVENTION

### TECHNICAL PROBLEM

Under these circumstances, it is an object of the present invention to provide a composition of a fluorocopolymer having repeating units based on ethylene and TFE, which is applicable to e.g. production of a thin film by coating, and which can be produced at a relatively low temperature, and a process for producing such a fluorocopolymer composition at a relatively low temperature.

### SOLUTION TO PROBLEM

The present invention provides the following fluorocopolymer composition and process for producing it.
[1] A fluorocopolymer composition which comprises 1 to 5 mass.% of a fluorocopolymer having repeating units based on ethylene and repeating units based on tetrafluoroethylene, and 95 to 99 mass % of a C₆-₁₀ aliphatic compound having one carbonyl group, and has a temperature ranges within which the composition is in a solution states of at most the melting point of the fluorocopolymer.
[2] The fluorocopolymer composition according to the above [1], wherein the aliphatic compound has a boiling point of at least 50°C and at most 230°C.
[3] The fluorocopolymer composition according to the above [1] or [2], wherein the dissolution temperature being the lower limit temperature in the temperature range within which the composition is in a solution state, is at most 230°C.
[4] The fluorocopolymer composition according to any one of the above [1] to [3], wherein the aliphatic compound is at least one member selected from the group consisting of a ketone, an ester and a carbonate.
[5] The fluorocopolymer composition according to the above [4], wherein the aliphatic compound is a cyclic ketone.
[6] The fluorocopolymer composition according to any one of [1] to [5], wherein in the temperature range within which the composition is in a solution state, the vapor pressure of the solution is at least within a range of at most autogenous pressure.
[7] The fluorocopolymer composition according to the above [6], wherein the vapor pressure of the solution is at least within a range of at most 3 MPa.
[8] The fluorocopolymer composition according to the above [6], wherein the vapor pressure of the solution is at most normal pressure.
[9] The fluorocopolymer composition according to any one of the above [1] to [8], which further contains an organic solvent other than the aliphatic compound.
[10] The fluorocopolymer composition according to any one of the above [1] to [9], wherein the fluorocopolymer has a molar ratio of repeating units based on tetrafluoroethylene/ repeating units based on ethylene being from 70/30 to 30170.
[11] A process for producing the fluorocopolymer composition as defined in any one of the above [1] to [10], which comprises a step of dissolving the fluorocopolymer having repeating units based on ethylene and repeating units based on tetrafluoroethylene, in the aliphatic compound or a mixed solvent containing the aliphatic compound, at a temperature of at most the melting point of the fluorocopolymer.
[12] The process for producing the fluorocopolymer composition according to the above [11], wherein the temperature is a temperature lower by at least 30°C than the melting point of the fluorocopolymer.

### ADVANTAGEOUS EFFECTS OF INVENTION

According to the present invention, it is possible to produce a fluorocopolymer composition having repeating units based on ethylene and TFE at a relatively low temperature. Further, by using the fluorocopolymer composition of the present invention having repeating units based on ethylene and TFE, it is possible to form various formed products such as a thin film, a film and a tube.

### DESCRIPTION OF EMBODIMENTS

Now, the embodiment of the present invention will be described in detail below.

First, the fluorocopolymer composition of the present invention which comprises a fluorocopolymer having repeating units based on ethylene and repeating units based on tetrafluoroethylene, and a C₆₋₁₀ aliphatic compound having one carbonyl group, and has a temperature range within which the composition is in a solution state being at least at a temperature of at most the melting point of the fluorocopolymer, will be described.

The fluorocopolymer in the fluorocopolymer composition of the present invention is not particularly limited so long as it is a fluorocopolymer having repeating units based on ethylene and repeating units based on tetrafluoroethylene. Such a fluorocopolymer may, for example, be specifically an ETFE having as main repeating units in the copolymer repeating units based on ethylene and repeating units based on tetrafluoroethylene (hereinafter, referred to as "TFE").

The ETFE may, for example, be one having a molar ratio of repeating units based on TFE/repeating units based on ethylene of preferably from 70/30 to 30/70, more preferably from 65/35 to 40/60, most preferably from 60/40 to 40/60.

Further, the ETFE may have, in addition to repeating units based on TFE and ethylene, repeating units based on another monomer. Such another monomer may, for example, be a fluoroethylene (excluding TFE) such as CF₂=CFCl or CF₂=CH₂; a fluoropropylene such as CF₂=CFCF₃ or CF₂=CHCF₃; a (polyfluoroalkyl)ethylene having a C₂-₁₂ fluoroalkyl group such as CF₃CF₂CH=CH₂, CF₃CF₂CF₂CF₂CH=CH₂, CF₃CF₂CF₂CF₂CF=CH₂ or CF₂HCF₂CF₂CF=CH₂; a perfluorovinyl ether such as R^{f} (OCFXCF₂)ₘOCF=CF₂ (wherein R^{f} is a C₁₋₆ perfluoroalkyl group, X is a fluorine atom or a trifluoromethyl group, and m is an integer of from 0 to 5), CF₂=CFCF₂OCF=CF₂ or CF₂=CF(CF₂)₂OCF=CF₂; a perfluorovinyl ether having a group capable of being readily converted to a carboxylic acid group or a sulfonic acid group, such as CH₃OC(=O)CF₂CF₂CF₂OCF=CF₂ or FSO₂CF₂CF₂0CF(CF₃)CF₂0CF=CF₂; or an olefin (excluding ethylene) such as a C3 olefin having 3 carbon atoms such as propylene, a C4 olefin having 4 carbon atoms such as butylenes or isobutylene, 4-methyl-1-pentene, cyclohexene, styrene or α-methylstyrene; a vinyl ester such as vinyl acetate, vinyl lactate, vinyl butyrate, vinyl pivalate or vinyl benzoate; an allyl ester such as allyl acetate; a vinyl ether such as methyl vinyl ether, ethyl vinyl ether, tert-butyl vinyl ether, cyclohexyl vinyl ether or 4-hydroxybutyl vinyl ether; a (meth)acrylate such as methyl (meth)acrylate, ethyl (meth)acrylate, n-butyl (meth)acrylate, isobutyl (meth)acrylate or cyclohexyl (meth)acrylate; a (meth)acrylamide such as (meth)acrylamide or N-methyl (meth)acrylamide; a cyano group-containing monomer such as acrylonitrile; or a chloroolefin such as vinyl chloride or vinylidene chloride. Such comonomers may be used alone or in combination of two or more of them.

Further, as another monomer, a monomer having a crosslinkable functional group may be mentioned in addition to the above comonomer. Such a monomer may, for example, be specifically itaconic anhydride, maleic anhydride, citraconic anhydride or 5-norbornene-2,3-dicarboxylic anhydride.

In a case where the above ETFE has such repeating units based on another monomer in addition to the repeating units based on TFE and ethylene, the ratio is usually at most 50 mol%, preferably at most 30 mol%, more preferably from 0.1 to 15 mol%, most preferably from 0.2 to 10 mol%, based on all the repeating units in the ETFE.

As a process for producing the fluorocopolymer in the composition of the present invention, it is possible to use a copolymer obtained by copolymerizing ethylene, TFE and such another monomer which may optionally be contained, by means of a usual method. As the polymerization method, solution polymerization, suspension polymerization, emulsion polymerization, bulk polymerization or the like may be mentioned.

As the fluorocopolymer in the present invention, it is possible to use a commercially available product. As such a commercially available fluorocopolymer product, for example, the ETFE may, for example, be Fluon (trademark) ETFE Series or Fluon (trademark) LM Series manufactured by Asahi Glass Company, Limited, NEOFLON (trademark) manufactured by DAIKIN INDUSTRIES, LTD., Dyneon (trademark) ETFE manufactured by Dyneon or Tefzel (trademark) manufactured by DuPont. Further, the melting point of the fluoropolymer in the composition of the present invention is not particularly limited, but in view of the solubility, the strength, etc. it is preferably from 130°C to 275°C, more preferably from 140°C to 265°C, most preferably from 150°C to 260°C.

In the fluorocopolymer composition of the present invention, one of such fluorocopolymers alone or a mixture of two or more may be contained.

In the fluorocopolymer composition of the present invention, the content of the fluorocopolymer is from 1 to 5 mass%, to the total amount of the composition. When the content is within such a range, handling efficiency e.g. at the time of coating in preparation of a thin film will be excellent, and a homogenous thin film made of the fluorocopolymer can be obtained.

Now, the aliphatic compound in the composition of the present invention will be described.

The aliphatic compound in the present invention is a C₆₋₁₀ aliphatic compound having one carbonyl group. In the composition of the present invention, the above aliphatic compound containing a carbonyl group has a role to dissolve the above fluorocopolymer therein to obtain a composition, as described in the after-mentioned production process. So long as the above aliphatic compound containing a carbonyl group is a liquid at a temperature at which the above fluorocopolymer is soluble in the aliphatic compound containing a carbonyl group to be used, any aliphatic compound containing a carbonyl group can be used without any problem in practice, but one which is liquid at room temperature is preferred. The melting point of the aliphatic compound containing a carbonyl group is preferably at most 230°C.

In this specification, the state of "a solution" in which the fluorocopolymer is "dissolved" in the aliphatic compound containing a carbonyl group is a transparent and uniform state as visually observed after a mixture of the fluorocopolymer and the aliphatic compound containing a carbonyl group is sufficiently mixed at a certain temperature, as mentioned above. The composition in this state is a solution in which the fluorocopolymer is dissolved in the aliphatic compound containing a carbonyl group.

Further, the "dissolution temperature" means a lower limit temperature in the temperature range within which the composition is in a solution state, and is a temperature measured by the following method. That is, the fluorocopolymer is added to the aliphatic compound containing a carbonyl group, and the mixture is heated and its temperature is raised while a sufficiently mixed state is always kept e.g. by a stirring means, and whether the fluorocopolymer is dissolved or not is visually observed. First, a temperature at which the mixture is confirmed to be a transparent and uniform solution and completely dissolved, is confirmed. Then, the solution is once gradually cooled and a temperature at which the solution becomes turbid is confirmed, and then the mixture is reheated, and a temperature at which a transparent and uniform solution is obtained again, is regarded as the dissolution temperature.

If the melting temperature of the above aliphatic compound containing a carbonyl group exceeds 230°C, such a compound hardly becomes a solution at the dissolution temperature even when the mixture with the fluorocopolymer is heated and its temperature is raised. The melting point of the aliphatic compound containing a carbonyl group is preferably at most 50°C, more preferably at most 20°C. When the melting point is within such a range, handling efficiency when the fluorocopolymer is dissolved will be excellent.

The boiling point of the above aliphatic compound containing a carbonyl group in the composition of the present invention is preferably the same as or higher than the temperature in a step in which the fluorocopolymer is dissolved in the aliphatic compound containing a carbonyl group. However, in the present invention, in a case where dissolution of the fluorocopolymer is carried out under autogenous pressure, an aliphatic compound containing a carbonyl group having a boiling point of at most the temperature in the step of dissolution is applicable. The "autogenous pressure" means a pressure which a mixture of the aliphatic compound containing a carbonyl group and the fluorocopolymer spontaneously shows in a closed vessel.

In the composition of the present invention, the fluorocopolymer and the above aliphatic compound containing a carbonyl group are heated to a predetermined temperature in a closed vessel to obtain a transparent and uniform solution at an easily conductible temperature in practice, that is, at a temperature of at most a melting point of the fluorocopolymer, preferably at a temperature lower by at least 30°C than the melting point of the fluorocopolymer. The solubility depends upon only a type and a temperature of the aliphatic compound to be used, regardless of the pressure. So long as the mixture of the aliphatic compound and the fluorocopolymer reaches a predetermined temperature, the pressure at that time is not particularly limited. In a case where an aliphatic compound having a lower boiling point is used, the autogenous pressure tends to be high, and therefore from the viewpoints of safety and convenience, the boiling point of the aliphatic compound containing a carbonyl group to be used is preferably at least room temperature, more preferably at least 50°C, most preferably at least 80°C. The boiling point of the above aliphatic compound containing a carbonyl group is not particularly limited, but is preferably at most 230°C from the viewpoint of drying properties, etc., when the composition is used for coating.

The aliphatic compound containing a carbonyl group in the composition of the present invention is a C₆₋₁₀ aliphatic compound having one carbonyl group. As the aliphatic compound containing a carbonyl group, any compound may be employed so long as it can constitute a solution together with the fluorocopolymer, at a temperature of at most the melting point of the above fluorocopolymer. Its molecular structure is not particularly limited, its carbon skeleton may, for example, be linear, branched or cyclic, an ether oxygen may be present between a carbon-carbon bond constituting its main chain or its side chain, and some of hydrogen atoms bonded to carbon atoms may be substituted by a halogen atom such as a fluorine atom.

In the composition of the present invention, as a specific example of a C₆₋₁₀ aliphatic compound having one carbonyl group, at least one member selected from the group consisting of a ketone such as a cyclic ketone or a linear ketone, an ester such as a linear ester or a monoester of a glycol and a carbonate, may suitably be mentioned. Among them, a cyclic ketone is more preferred as the above aliphatic compound containing a carbonyl group in the composition of the present invention. They may be used alone or in combination of two or more of them.

Now, more specific examples of the above-exemplified compounds will be described as the above aliphatic compound containing a carbonyl group preferably used in the present invention.

Specific examples of the above cyclic ketone include 2-propylcyclopropanone, 2-isopropylcyclopropanone, 2,2,3-trimethylcyclopropanone, 2-ethyl-3-methylcyclopropanone, 2-butylcyclopropanone, 2-isobutylcyclopropanone, 2-tert-butylcyclopropanone, 2-methyl-3-propylcyclopropanone, 2-methyl-3-isopropylcyclopropanone, 2-ethyl-3,3-dimethylcyclopropanone, 2,2,3,3-tetramethylcyclopropanone, 2-pentylcyclopropanone, 2-isopentylcyclopropanone, 2-butyl-3-methylcyclopropanone, 2-ethyl-3-propylcyclopropanone, 2-hexylcyclopropanone, 2-methyl-3-pentylcyclopropanone, 2-butyl-3-ethylcyclopropanone, 2,3-dipropylcyclopropanone, 2-heptylcyclopropanone, 2-hexyl-3-methylcyclopropanone, 2-ethyl-3-pentylcyclopropanone, 2-butyl-3-propylcyclopropanone, 2-ethylcyclobutanone, 3-ethylcyclobutanone, 2,2-dimethylcyclobutanone, 2,3-dimethylcyclobutanone, 3,3-dimethylcyclobutanone, 2,4-dimethylcyclobutanone, 2-propylcyclobutanone, 3-propylcyclobutanone, 2-isopropylcyclobutanone, 3-isopropylcyclobutanone, 2,2,3-trimethylcyclobutanone, 2,3,3-trimethylcyclobutanone, 2,3,4-trimethylcyclobutanone, 2,2,4-trimethylcyclobutanone, 2-butylcyclobutanone, 2-isobutylcyclobutanone, 2-tert-butylcyclobutanone, 3-butylcyclobutanone, 3-isobutylcyclobutanone, 3-tert-butylcyclobutanone, 2-pentylcyclobutaone, 3-pentylcyclobutanone, 2-isopentylcyclobutanone, 3-isopentylcyclobutanone, 2-hexylcyclobutanone, 3-hexylcyclobutanone, 2-methylcyclopentanone, 3-methylcyclopentanone, 2-ethylcyclopentanone, 3-ethylcyclopentanone, 2,2-dimethylcyclopentanone, 2,3-dimethylcyclopentanone, 3,3-dimethylcyclopentanone, 2,5-dimethylcyclopentanone, 2,4-dimethylcyclopentanone, 3,4-dimethylcyclopentanone, 2-propylcyclopentanone, 2-isopropylcyclopentanone, 3-propylcyclopentanone, 3-isopropylcyclopentanone, 2,2,5-trimethylcyclopentanone, 2-butylcyclopentanone, 2-isobutylcyclopentanone, 2-tert-butylcyclopentanone, 3-butylcyclopentanone, 3-isobutylcyclopentanone, 3-tert-butylcyclopentanone, 2,2,5,5-tetramethylcyclopentanone, 2-pentylcyclopentanone, 2-isopentylcyclopentanone, 3-pentylcyclopentanone, 3-isopentylcyclopentanone, cyclohexanone, 2-methylcyclohexanone, 3-methylcyclohexanone, 4-methylcyclopentanone, 2-ethylcyclohexanone, 3-ethylcyclohexanone, 4-ethylcyclohexanone, 2,2-dimethylcyclohexanone, 2,3-dimethylcyclohexanone, 2,4-dimethylcyclohexanone, 2,5-dimethylcyclohexanone, 2,6-dimethylcyclohexanone, 2-propylcyclohexanone, 2-isopropylcyclohexanone, 3-propylcyclohexanone, 3-isoproylcyclohexanone, 4-propylcyclohexanone, 4-isopropylcyclohexanone, 2,2,6-trimethylcyclohexanone, 2,2,4-trimethylcyclohexanone, 2,4,4-trimethylcyclohexanone, 3,3,5-trimethylcyclohexanone, 2,4,6-trimethylcyclohexanone, 2-butylcyclohexanone, 2-isobutylcyclohexanone, 2-tert-butylcyclohexanone, 3-butylcyclohexanone, 3-isobutylcyclohexanone, 3-tert-butylcyclohexanone, 4-butylcyclohexanone, 4-isobutylcyclohexanone, 4-tert-butylcyclohexanone, 2,2-diethylcyclohexanone, 2,4-diethylcyclohexanone, 2,6-diethylcyclohexanone, 3,5-diethylcyclohexanone, 2,2,6,6-tetramethylcyclohexanone, cycloheptanone, 2-methylcycloheptanone, 3-methylcycloheptanone, 4-methylcycloheptanone, 2-ethylcycloheptanone, 3-ethylcycloheptanone, 4-ethylcycloheptanone, 2,2-dimethylcycloheptanone, 2,7-dimethylcycloheptanone, 2-propylcycloheptanone, 2-isopropylcycloheptanone, 3-propylcycloheptanone, 3-isopropylcycloheptanone, 4-propylcycloheptanone, 4-isopropylcycloheptanone, 2,2,7-trimethylcycloheptanone, cyclooctanone, 2-methylcyclooctanone, 3-methylcyclooctanone, 4-methylcyclooctanone, 5-methylcyclooctanone, 2-ethylcyclooctanone, 3-ethylcyclooctanone, 4-ethylcyclooctanone, 5-ethylcyclooctanone, 2,2-dimethylcyclooctanone, 2,8-dimethylcyclooctanone, cyclononanone, 2-methylcyclononanone, 3-methylcyclononanone, 4-methylcyclononanone, 5-methylcyclononanone, cyclodecanone, isophorone, (-)-fenchone((1R,4S)-1,3,3-trimethylbicyclo[2.2.1]heptan-2-one), and (+)-fenchone((1S,4R)-1,3,3-trimethylbicyclo[2.2.1]heptan-2-one).

Specific examples of the above linear ketone include 2-hexanone, 3-hexanone, methyl isobutyl ketone, ethyl isopropyl ketone, 3,3-dimethyl-2-butanone, 2-heptanone, 3-heptanone, 4-heptanone, diisopropyl ketone, 5-methyl-2-hexanone, 2-octanone, 3-octanone, 4-octanone, 5-methyl-3-heptanone, 2-nonanone, 3-nonanone, 4-nonanone, 5-nonanone, diisobutyl ketone, 2-decanone, 3-decanone, 4-decanone and 5-decanone.

Specific examples of the linear ester include pentyl formate, isopentyl formate, cyclopentyl formate, hexyl formate, cyclohexyl formate, heptyl formate, octyl formate, 2-ethylhexyl formate, nonyl formate, butyl acetate, isobutyl acetate, sec-butyl acetate, tert-butyl acetate, pentyl acetate, isopentyl acetate, cyclopentyl acetate, hexyl acetate, cyclohexyl acetate, heptyl acetate, octyl acetate, 2-etylhexyl acetate, propyl propionate, isopropyl propionate, butyl propionate, isobutyl propionate, sec-butyl propionate, tert-butyl propionate, pentyl propionate, isopentyl propionate, cyclopentyl propionate, hexyl propionate, cyclohexyl propionate, heptyl propionate, 2,2,3,3,3-pentafluoropropyl propionate, 2,2,3,3-tetrafluoropropyl propionate, ethyl butyrate, propyl butyrate, isopropyl butyrate, butyl butyrate, isobutyl butyrate, sec-butyl butyrate, tert-butyl butyrate, pentyl butyrate, isopentyl butyrate, cyclopentyl butyrate, hexyl butyrate, cyclohexyl butyrate, 2,2,2-trifluoroethyl butyrate, 2,2,3,3,3-pentafluoropropyl butyrate, 2,2,3,3-tetrafluoropropyl butyrate, ethyl isobutyrate, propyl isobutyrate, isopropyl isobutyrate, butyl isobutyrate, isobutyl isobutyrate, sec-butyl isobutyrate, tert-butyl isobutyrate, pentyl isobutyrate, isopentyl isobutyrate, cyclopentyl isobutyrate, hexyl isobutyrate, cyclohexyl isobutyrate, 2,2,2-trifluoroethyl isobutyrate, 2,2,3,3,3-pentafluoropropyl isobutyrate, 2,2,3,3-tetrafluoropropyl isobutyrate, methyl valerate, ethyl valerate, propyl valerate, isopropyl valerate, butyl valerate, isobutyl valerate, sec-butyl valerate, tert-butyl valerate, pentyl valerate, isopentyl valerate, 2,2,2-trifluoroethyl valerate, 2,2,3,3,3-pentafluoropropyl valerate, 2,2,3,3-tetrafluoropropyl valerate, methyl isovalerate, ethyl isovalerate, propyl isovalerate, isopropyl isovalerate, butyl isovalerate, isobutyl isovalerate, sec-butyl isovalerate, tert-butyl isovalerate, pentyl isovalerate, isopentyl isovalerate, 2,2,2-trifluoroethyl isovalerate, 2,2,3,3,3-pentafluoropropyl isovalerate, 2,2,3,3-tetrafluoropropyl isovalerate, methyl pivalate, ethyl pivalate, propyl pivalate, isopropyl pivalate, butyl pivalate, isobutyl pivalate, sec-butyl pivalate, tert-butyl pivalate, pentyl pivalate, isopentyl pivalate, 2,2,2-trifluoroethyl pivalate, 2,2,3,3,3-pentafluoropropyl pivalate, 2,2,3,3-tetrafluoropropyl pivalate, methyl hexanoate, ethyl hexanoate, propyl hexanoate, isopropyl hexanoate, butyl hexanoate, isobutyl hexanoate, sec-butyl hexanoate, tert-butyl hexanoate, 2,2,2-trifluoroethyl hexanoate, 2,2,3,3,3-pentafluoropropyl hexanoate, 2,2,3,3-tetrafluoropropyl hexanoate, methyl heptanoate, ethyl heptanoate, propyl heptanoate, isopropyl heptanoate, 2,2,2-trifluoroethyl heptanoate, 2,2,3,3,3-pentafluoropropyl heptanoate, 2,2,3,3-tetrafluoropropyl heptanoate, methyl cyclohexanecarboxylate, ethyl cyclohexanecarboxylate, propyl cyclohexanecarboxylate, isopropyl cyclohexanecarboxylate, 2,2,2-trifluoroethyl cyclohexanecarboxylate, 2,2,3,3,3-pentafluoropropyl cyclohexanecarboxylate, 2,2,3,3-tetrafluoropropyl cyclohexanecarboxylate, methyl octanoate, ethyl octanoate, 2,2,2-trifluoroethyl octanoate, methyl nonanoate, butyl trifluoroacetate, pentyl trifluoroacetate, hexyl trifluoroacetate, heptyl trifluoroacetate, octyl trifluoroacetate, propyl pentafluoropropionate, butyl pentafluoropropionate, pentyl pentafluoropropionate, hexyl pentafluoropropionate, heptyl pentafluoropropionate, ethyl perfluorobutanoate, propyl perfluorobutanoate, butyl perfluorobutanoate, pentyl perfluorobutanoate, hexyl perfluorobutanoate, methyl perfluoropentanoate, ethyl perfluoropentanoate, propyl perfluoropentanoate, butyl perfluoropentanoate, pentyl perfluoropentanoate, methyl perfluorohexanoate, ethyl perfluorohexanoate, propyl perfluorohexanoate, butyl perfluorohexanoate, methyl perfluoroheptanoate, ethyl perfluoroheptanoate, propyl perfluoroheptanoate, methyl perfluorooctanoate and ethyl perfluorooctanoate.

Specific examples of the above monoester of a glycol include 2-ethoxyethyl acetate, 2-propoxyethyl acetate, 2-butoxyethyl acetate, 2-pentyloxyethyl acetate, 2-hexyloxyethyl acetate, 1-methoxy-2-acetoxypropane, 1-ethoxy-2-acetoxypropane, 1-propoxy-2-acetoxypropane, 1-butoxy-2-acetoxypropane, 1-pentyloxy-2-acetoxypropane, 3-methoxybutyl acetate, 3-ethoxybutyl acetate, 3-propoxybutyl acetate, 3-butoxybutyl acetate, 3-methoxy-3-methylbutyl acetate, 3-ethoxy-3-methylbutyl acetate, 3-propoxy-3-methylbutyl acetate, 4-methoxybutyl acetate, 4-ethoxybutyl acetate, 4-propoxybutyl acetate and 4-butoxybutyl acetate.

Specific examples of the above carbonate include butylmethyl carbonate, ethylpropyl carbonate, dipropyl carbonate, diisopropyl carbonate, butylpropyl carbonate, butylisopropyl carbonate, isobutylpropyl carbonate, tert-butylpropyl carbonate, tert-butylisopropyl carbonate, dibutyl carbonate, diisobutyl carbonate, ditert-butyl carbonate, bis(2,2,3,3,3-pentafluoropropyl)carbonate, bis(2,2,3,3-tetrafluoropropyl)carbonate, bis(1,1,1,3,3,3-hexafluoroisopropyl)carbonate, bis(2,2,3,3,4,4,4-heptafluorobutyl)carbonate and bis(perfluoro-tert-butyl)carbonate.

Among such aliphatic compounds containing a carbonyl group, as specific examples of a more preferred compound as the above aliphatic compound containing a carbonyl group in the composition of the present invention, the following compounds may be mentioned.

The above cyclic ketone may, for example, be 2-methylcyclopentanone, 3-methylcyclopentanone, 2-ethylcyclopentanone, 3-ethylcyclopentanone, 2,2-dimethylcyclopentanone, 2,3-dimethylcyclopentanone, 3,3-dimethylcyclopentanone, 2,5-dimethylcyclopentanone, 2,4-dimethylcyclopentanone, 3,4-dimethylcyclopentanone, 2-propylcyclopentanone, 2-isopropylcyclopentanone, 3-propylcyclopentanone, 3-isopropylcyclopentanone, 2,2,5-trimethylcyclopentanone, 2-butylcyclopentanone, 2-isobutylcyclopentanone, 2-tert-butylcyclopentanone, 3-butylcyclopentanone, 3-isobutylcyclopentanone, 3-tert-butylcyclopentanone, 2,2,5,5-tetramethylcyclopetanone, cyclohexanone, 2-methylcyclohexanone, 3-methylcyclohexanone, 4-methylcyclohexanone, 2-ethylcyclohexanone, 3-ethylcyclohexanone, 4-ethylcyclohexanone, 2,2-dimethylcyclohexanone, 2,3-dimethylcycylohexanone, 2,4-dimethylcyclohexanone, 2,5-dimethylcyclohexanone, 2,6-dimethylcyclohexanone, 2-propylcyclohexanone, 2-isopropylcyclohexanone, 3-propylcyclohexanone, 3-isopropylcyclohexanone, 4-propylcyclohexanone, 4-isopropylcyclohexanone, 2,2,6-trimethylcyclohexanone, 2,2,4-trimethylcyclohexanone, 2,4,4-trimethylcyclohexanone, 3,3,5-trimethylcyclohexanone, 2,4,6-trimethylcyclohexanone, 2-butylcyclohexanone, 2-isobutylcyclohexanone, 2-tert-butylcyclohexanone, 3-butylcyclohexanone, 3-isobutylcyclohexanone, 3-tert-butylcyclohexanone, 4-butylcyclohexanone, 4-isobutylcyclohexanone, 4-tert-butylcyclohexanone, 2,2-diethylcyclohexanone, 2,4-diethylcyclohexanone, 2,6-diethylcyclohexanone, 3,5-diethylcyclohexanone, 2,2,6,6-tetramethylcyclohexanone, cycloheptanone, 2-methylcycloheptanone, 3-methylcycloheptanone, 4-methylcycloheptanone, 2-ethylcycloheptanone, 3-ethylcycloheptanone, 4-ethylcycloheptanone, 2,2-dimethylcycloheptanone, 2,7-dimethylcycloheptanone, 2-propylcycloheptanone, 2-isopropylcycloheptanone, 3-propylcycloheptanone, 3-isopropylcycloheptanone, 4-propylcycloheptanone, 4-isopropylcycloheptanone, 2,2,7-trimethylcycloheptanone, isophorone, (-)-fenchone or (+)-fenchone.

The above linear ketone may, for example, be 2-hexanone, methyl isobutyl ketone, 3,3-dimethyl-2-butanone, 2-heptanone, 3-heptanone, 4-heptanone, diisopropyl ketone, 5-methyl-2-hexanone, 2-octanone, 3-octanone, 5-methyl-3-heptanone, 2-nonanone, 5-nonanone, diisobutyl ketone, 2-decanone or 3-decanone.

The above linear ester may, for example, be pentyl formate, isopentyl formate, hexyl formate, butyl acetate, isobutyl acetate, sec-butyl acetate, tert-butyl acetate, pentyl acetate, isopentyl acetate, hexyl acetate, cyclohexyl acetate, heptyl acetate, octyl acetate, 2-ethylhexyl acetate, propyl propionate, isopropyl propionate, butyl propionate, isobutyl propionate, tert-butyl propionate, pentyl propionate, isopentyl propionate, hexyl propionate, cyclohexyl propionate, ethyl butyrate, propyl butyrate, isopropyl butyrate, butyl butyrate, isobutyl butyrate, tert-butyl butyrate, pentyl butyrate, isopentyl butyrate, hexyl butyrate, cyclohexyl butyrate, 2,2,2-trifluoroethyl butyrate, ethyl isobutyrate, propyl isobutyrate, isopropyl isobutyrate, butyl isobutyrate, isobutyl isobutyrate, tert-butyl isobutyrate, pentyl isobutyrate, isopentyl isobutyrate, hexyl isobutyrate, cyclohexyl isobutyrate, 2,2,2-trifluoroethyl isobutyrate, methyl valerate, ethyl valerate, propyl valerate, isopropyl valerate, butyl valerate, isobutyl valerate, tert-butyl valerate, pentyl valerate, isopentyl valerate, 2,2,2-trifluoroethyl valerate, methyl isovalerate, ethyl isovalerate, propyl isovalerate, isopropyl isovalerate, butyl isovalerate, isobutyl isovalerate, tert-butyl isovalerate, pentyl isovalerate, isopentyl isovalerate, 2,2,2-trifluoroethyl isovalerate, methyl pivalate, ethyl pivalate, propyl pivalate, isopropyl pivalate, butyl pivalate, isobutyl pivalate, tert-butyl pivalate, pentyl pivalate, isopentyl pivalate, 2,2,2-trifluoroethyl pivalate, methyl hexanoate, ethyl hexanoate, propyl hexanoate, isopropyl hexanoate, butyl hexanoate, isobutyl hexanoate, tert-butyl hexanoate, 2,2,2-trifluoroethyl hexanoate, methyl heptanoate, ethyl heptanoate, propyl heptanoate, isopropyl heptanoate, 2,2,2-trifluoroethyl heptanoate, methyl cyclohexanecarboxylate, ethyl cyclohexanecarboxylate, propyl cyclohexanecarboxylate, isopropyl cyclohexanecarboxylate, 2,2,2-trifluoroethyl cyclohexanecarboxylate, methyl octanoate, ethyl octanoate, 2,2,2-trifluoroethyl octanoate, methyl nonanoate, butyl trifluoroacetate, methyl perfluoropentanoate, ethyl perfluoropentanoate, propyl perfluoropentanoate, butyl perfluoropentanoate, pentyl perfluoropentanoate, methyl perfluoroheptanoate, ethyl perfluoroheptanoate or propyl perfluoroheptanoate.

The above monoester of a glycol may, for example, be 2-ethoxyethyl acetate, 2-butoxyethyl acetate, 1-methoxy-2-acetoxypropane, 1-ethoxy-2-acetoxypropane, 1-butoxy-2-acetoxypropane, 3-methoxybutyl acetate, 3-methoxy-3-methylbutyl acetate, 3-ethoxy-3-methylbutyl acetate, 4-methoxybutyl acetate, 4-ethoxybutyl acetate or 4-butoxylbutyl acetate.

The above carbonate may, for example, be dipropyl carbonate, bis(2,2,3,3,3-pentafluoropropyl)carbonate, bis(2,2,3,3-tetrafluoropropyl)carbonate, bis(1,1,1,3,3,3-hexafluoroisopropyl)carbonate, bis(2,2,3,3,4,4,4-heptafluorobutyl)carbonate or bis(perfluoro-tert-butyl)carbonate.

Further, as the above aliphatic compound containing a carbonyl group in the composition of the present invention, the following compounds may specifically be mentioned as more preferred compounds.

The above cyclic ketone may be cyclohexanone, 2-methylcyclohexanone, 3-methylcyclohexanone, 4-ethylcyclohexanone, 2,6-dimethylcyclohexanone, 3,3,5-trimethylcyclohexanone, 4-tert-butylcyclohexanone, cycloheptanone, isophorone or (-)-fenchone.

The above linear ketone may be 2-hexanone, methyl isobutyl ketone, 2-heptanone, diisopropyl ketone, 5-methyl-2-hexanone, 2-octanone, 2-nonanone, diisobutyl ketone or 2-decanone.

The above linear ester may be isopentyl formate, butyl acetate, isobutyl acetate, pentyl acetate, isopentyl acetate, hexyl acetate, cyclohexyl acetate, octyl acetate, 2-ethylhexyl acetate, ethyl butyrate, butyl butyrate, pentyl butyrate, methyl cyclohexanecarboxylate, 2,2,2-trifluoroethyl cyclohexanecarboxylate or ethyl perfluoropentanoate.

The above monoester of a glycol may be 2-ethoxyethyl acetate, 2-butoxyethyl acetate, 1-methoxy-2-acetoxypropane, 1-ethoxy-2-acetoxypropane, 3-methoxybutyl acetate or 3-methoxy-3-methylbutyl acetate.

The above carbonate may be bis(2,2,3,3-tetrafluoropropyl)carbonate.

The fluorocopolymer composition of the present invention contains the above-described C₆-₁₀ aliphatic compound having one carbonyl group. In the fluorocopolymer composition of the present invention, the aliphatic compound containing a carbonyl group has a function as a solvent which dissolves the above-described fluorocopolymer. Here, the "dissolution" of the fluorocopolymer in the above aliphatic compound containing a carbonyl group includes the dissolution at least at a temperature of at most the melting point of the fluorocopolymer to be dissolved. That is, the fluorocopolymer composition of the present invention has a temperature range within which the composition is in a solution state being at least at a temperature of at most the melting point of the above-described fluorocopolymer. In other words, the fluorocopolymer composition of the present invention should maintain a solution state in a certain temperature range of at most the melting point of the fluorocopolymer, and is not necessarily in a solution state at room temperature

Further, the dissolution temperature being the lower limit temperature in the temperature range within which the fluorocopolymer composition of the present invention in a solution state is preferably at most 230°C, more preferably at most 200°C. If the dissolution temperature of the fluorocopolymer composition exceeds 230°C, dissolution may sometimes be not readily conducted in practical operation.

Further, in the temperature range within which the fluorocopolymer composition of the present invention is in a solution state, the vapor pressure of the solution is preferably at least within a range of at most autogenous pressure, more preferably within a range of at most 3 MPa, further more preferably within a range of at most 2 MPa, particularly preferably within a range of at most 1 MPa, most preferably at most normal pressure. When the vapor pressure of the solution in a solution state of the fluorocopolymer composition of the present invention is within such a range, practical operation is easily conductible.

Further, in the composition of the present invention, as a solvent which dissolves the fluorocopolymer, a compound selected from the above aliphatic compounds containing a carbonyl group alone may be used. Or it is possible to use a mixed solvent of the above aliphatic compound containing a carbonyl group in combination with another organic solvent, for example, at least one member selected from an aromatic compound, an aliphatic compound containing no carbonyl group and the like. The fluorocopolymer composition of the present invention may contain, in addition to the above fluorocopolymer and aliphatic compound containing a carbonyl group as essential components, another organic solvent other than the above aliphatic compound containing a carbonyl group as an optional component.

Such another organic solvent other than the aliphatic compound containing a carbonyl group optionally incorporated in the composition of the present invention is not particularly limited, but is preferably an organic solvent miscible with the aliphatic compound containing a carbonyl group to be mixed at least at the dissolution temperature of the fluorocopolymer. As such another organic solvent other than the above aliphatic compound containing a carbonyl group which can be mixed in the composition of the present invention, specifically, an aromatic compound such as benzonitrile, acetophenone, nitrobenzene or methyl benzoate, or an ether such as tetrahydrofuran, 1,4-dioxane or 1,1,1,2,3,3-hexafluoro-4-(1,1,2,3,3,3-hexafluoropropoxy)pentane may preferably be mentioned. Further, in a case where the composition of the present invention contains such another organic solvent other than the aliphatic compound containing a carbonyl group, the mixing ratio is preferably from 9/1 to 1/9, more preferably from 5/5 to 3/7 as the ratio (mass ratio) of the aliphatic compound containing a carbonyl group/another organic solvent other than the aliphatic compound containing a carbonyl group. By employing such a mixed solvent, a drying rate of the solvent from a formed product can readily be controlled.

In the fluorocopolymer composition of the present invention, the content of the above aliphatic compound containing a carbonyl group or the above mixed solvent of the aliphatic compound containing a carbonyl group and such another organic solvent (hereinafter the aliphatic compound containing a carbonyl group or the mixed solvent containing the aliphatic compound containing a carbonyl group will be referred to as "a solvent such as the aliphatic compound containing a carbonyl group" as the case requires) is from 95 to 99 mass% to the total amount of the composition. When the content is within such a range, handling efficiency e.g. at the time of coating in preparation of a thin film will be excellent, and a homogeneous thin film made of the fluorocopolymer can be obtained.

The fluorocopolymer composition of the present invention contains the above-described fluorocopolymer and aliphatic compound containing a carbonyl group as essential components and contains the above organic solvent other than the aliphatic compound containing a carbonyl group as an optional component, and further, as the case requires, may contain another optional component within a range not to impair the effect of the present invention. Such an optional component may, for example, be additives such as an antioxidant, an ultraviolet stabilizer, a crosslinking agent, a lubricant, a plasticizer, a thickner, a filler, a reinforcing agent, a pigment, a dye, a flame retardant or an antistatic agent. Further, the content of such an optional component which will not impair the effect of the present invention may be a content of at most 30 mass% to the total amount of the composition.

Now, the production process of the present invention to produce the fluorocopolymer composition of the present invention using the above various components which the fluorocopolymer composition of the present invention contains will be described below.

The process for producing a fluorocopolymer composition of the present invention is preferably a process for producing the fluorocopolymer composition, which comprises a step of dissolving the fluorocopolymer having repeating units based on ethylene and repeating units based on tetrafluoroethylene, in the aliphatic compound or a mixed solvent containing the aliphatic compound, at a temperature of at most the melting point of the fluorocopolymer. The temperature at which the above fluorocopolymer is dissolved in the aliphatic compound containing a carbonyl group or the solvent such as the aliphatic compound containing a carbonyl group, is more preferably a temperature lower by at least 30°C than the melting point of the fluorocopolymer to be used.

The melting point of the fluorocopolymer in the present invention is about 275°C at the highest, and accordingly a temperature in a step of dissolving the fluorocopolymer in the above solvent is preferably at most 245°C which is lower than 275°C by 30°C. The temperature at which the fluorocopolymer is dissolved in the aliphatic compound containing a carbonyl group or the solvent such as the aliphatic compound containing a carbonyl group, is more preferably at most 230°C, particularly preferably at most 200°C. Further, the lower limit of the temperature in the dissolution step is preferably 0°C, more preferably 20°C. If the temperature in the dissolution step is less than 0°C, no sufficient dissolution state will be obtained in some cases, and at a temperature exceeding 245°C, dissolution may sometimes be not readily conducted in practical operation. When the temperature is within such a range, dissolution will be readily conducted.

In the dissolution step in the process for producing the composition of the present invention, conditions other than the temperature are not particularly limited, and the step is preferably carried out usually under normal pressure. E.g. in a case where the boiling point is lower than the temperature in the dissolution step depending upon the type of the fluorocopolymer, the aliphatic compound containing a carbonyl group or the solvent such as the aliphatic compound containing a carbonyl group, dissolution may be carried out in a pressure resistant vessel under conditions of at least autogenous pressure or below, preferably at most 3 MPa, more preferably at most 2 MPa, further more preferably at most 1 MPa, most preferably at most normal pressure, but usually, it is possible to carry out the dissolution under conditions of from about 0.01 to 1 MPa.

The dissolution time depends on the content of the fluorocopolymer and the form of the fluorocopolymer in the composition of the present invention. The form of the fluorocopolymer to be used is preferably a powder in view of the operation efficiency to shorten the dissolution time, however, one in the form of pellets or in another form may also be used in view of availability, etc.

The dissolution means in the dissolution step is not a special means but may be a common method. For example, required amounts of the respective components to be incorporated in the composition are weighed, and these components are uniformly mixed so that the fluorocopolymer is dissolved in the aliphatic compound containing a carbonyl group or the solvent such as the aliphatic compound containing a carbonyl group at a temperature of at most the melting point of the fluorocopolymer used, preferably at a temperature of from 0 to 230°C, and the above dissolution is preferably conducted in view of efficiency by using a common stirring and mixing machine such as a homomixer, a Henschel mixer, a Banbury mixer, a pressure kneader, or a single screw or twin screw extruder. In a case where dissolution is carried out under pressure, an apparatus such as an autoclave equipped with a stirrer is used, and as the shape of the stirring blade, a marine propeller blade, a paddle blade, an anchor blade, a turbine blade or the like may be used.

It is preferred to form a coating film of the fluorocopolymer composition by applying the fluorocopolymer composition of the present invention on a substrate or by dipping a substrate in the fluorocopolymer composition. Then , the solvent is removed from the coating film to form a thin film of the fluorocopolymer.

The process of forming a thin film of the fluorocopolymer by using the fluorocopolymer composition of the present invention may, for example, be a process of applying the fluorocopolymer composition to a substrate at a temperature of at least the dissolution temperature of the fluorocopolymer in the composition, followed by drying (removal of the solvent) at a temperature of at least said temperature, a process of applying the fluorocopolymer composition to a substrate at a temperature of at most the dissolution temperature of the fluorocopolymer in the composition, and heating the composition to a temperature of at least the dissolution temperature of the fluorocopolymer, followed by drying (removal of the solvent) at a temperature of at least said temperature, or a process of once dissolving the fluorocopolymer in the fluorocopolymer composition, and applying the composition to a substrate at a temperature of at most the dissolution temperature, followed by drying at a temperature of at most the dissolution temperature of the fluorocopolymer to remove the solvent.

The method of applying the fluorocopolymer composition is not a special method, and a commonly employed method may be employed. Such an application method may, for example, be gravure coating, dip coating, die coating, electrostatic coating, brush coating, screen printing, roll coating or spin coating.

One embodiment of the process for forming a thin film of the fluorocopolymer using the fluorocopolymer composition of the present invention is a process including a step of applying the fluorocopolymer composition to a substrate at a temperature of at least the dissolution temperature of the fluorocopolymer in the composition, and is a process including a step of applying the fluorocopolymer composition characterized in that the fluorocopolymer is dissolved, and then it is applied to a substrate while it is in a dissolution state. By applying the fluorocopolymer composition in a state of a solution in which the fluorocopolymer is dissolved to a substrate by means of such an application step, and then removing the solvent e.g. by drying by heating, a dense and flat thin film of the fluorocopolymer can be obtained on the substrate. In the step of applying the fluorocopolymer composition, the preferred temperature of the composition varies depending on the fluorocopolymer composition, and is preferably from 50 to 250°C, more preferably from 80 to 200°C. If the temperature is lower than 50°C, the fluorocopolymer will not sufficiently be dissolved, and if the temperature exceeds 250°C, the solvent contained is likely to volatilize, such being unfavorable. When the temperature in the application step is within such a range, application operation smoothly proceeds, and a dense and flat thin film of the fluorocopolymer is formed on the substrate.

Another embodiment of the process for forming a thin film of the fluorocopolymer using the fluorocopolymer composition of the present invention may be a process including a step of applying the fluorocopolymer composition on a substrate at a temperature of at most the dissolution temperature of the fluorocopolymer in the composition and then heating the composition to a temperature of at least the dissolution temperature of the fluorocopolymer. In this process, after the heating step, e.g. drying by heating is further carried out to remove the solvent, whereby a thin film of the fluorocopolymer can be formed on the substrate. In this process, restrictions on an apparatus are loose, and the process is excellent in the operation efficiency, since the temperature of the composition in the step of applying the fluorocopolymer composition on the substrate may be low.

The fluorocopolymer composition used for such a process may be a composition in a state where a powdery fluorocopolymer is dispersed in the aliphatic compound containing a carbonyl group or the solvent such as the aliphatic compound containing a carbonyl group, or may be a composition in a state where the fluorocopolymer is once dissolved in the aliphatic compound containing a carbonyl group or the solvent such as the aliphatic compound containing a carbonyl group and then cooled so that the fluorocopolymer is dispersed in a form of fine particles. The latter is preferred from the viewpoint of the solubility. The temperature of the composition when the fluorocopolymer composition is applied on the substrate is not particularly limited, and is preferably from 0 to 150°C, more preferably from 5 to 80°C, from the viewpoint of operation efficiency. The heating temperature after application is preferably from 50 to 350°C, more preferably from 80 to 250°C. By heating within such a temperature range, the fluorocopolymer is dissolved and homogenized in the fluorocopolymer composition coating film, and by removing the solvent e.g. drying by heating, a dense and flat thin film of the fluorocopolymer can be obtained on the substrate.

Further, still another embodiment of the process for forming a thin film of the fluorocopolymer by using the fluorocopolymer composition of the present invention may be a process of once dissolving the fluorocopolymer in the aliphatic compound having a carbonyl group or the solvent such as the aliphatic compound having a carbonyl group in the fluorocopolymer composition, applying the composition on a substrate at a temperature of at most the dissolution temperature, and further drying the composition coating film on the substrate at a temperature of at most the dissolution temperature of the fluorocopolymer to remove the solvent.

By this process, which includes no step of applying a load of high temperature on the substrate, formation of a thin film of a fluorocopolymer on a material having low heat resistance, such as a plastic, paper or cloth, which has been difficult, can readily be conducted. The temperature of the fluorocopolymer composition when the composition is applied on the substrate is, when the above-described material having low heat resistance is used as the substrate, preferably set within a temperature range not exceeding the decomposition or deformation temperature of the substrate, and is preferably a temperature of from 0 to 150°C, more preferably a temperature of from 5 to 120°C, although it varies depending on the substrate. The drying temperature after application is preferably from 50 to 150°C, more preferably from 5 to 120°C. By carrying out application and drying within such a temperature range, it is possible to obtain a thin film of a fluorocopolymer having a uniform thickness on the substrate without decomposition nor deformation of the substrate, even when the substrate is made of a material having low heat resistance.

As described above, the fluorocopolymer composition of the present invention is a composition suitable for formation of a thin film of a fluorocopolymer on various substrates. The material and the form of the substrate on the surface of which a thin film of a fluorocopolymer can be formed by using the fluorocopolymer composition of the present invention, are not particularly limited, and specifically, substrates made of various materials such as a metal, glass, silicon, a plastic, a stone material, a wood material, a ceramic, cloth and paper may be mentioned. The thin film of the fluorocopolymer formed on the substrate may be used together with the substrate in the form of a substrate with a thin film or may be separated from the substrate and used by itself, depending on various applications.

In a case where the fluorocopolymer composition of the present invention is used to form a thin film of a fluorocopolymer on a substrate, which is used as it is in the form of a substrate with a thin film, a pretreatment may be applied to the substrate, for the purpose of improving the adhesion of the thin film to the substrate. For example, a silane coupling agent, polyethylenimine or the like may be applied to the substrate, the surface of the substrate may be physically treated e.g. by sandblasting, or treatment on the surface of the substrate e.g. by corona discharge may be carried out.

Further, the thin film of the fluorocopolymer formed on a substrate may be used, after separated from the substrate, as a formed product in the form of a film (hereinafter sometimes referred to simply as a "film"). In a case where it is separated from the substrate and used as a film, a substrate made of a material with good releasability may be used, or pretreatment may be applied to the substrate e.g. by a release agent. By producing a film of a fluorocopolymer by using the fluorocopolymer composition of the present invention in such a manner, it is possible to produce a film which is thin and uniform, as compared with a film obtainable by a common melt forming.

The thickness of the thin film of the fluorocopolymer formed on a substrate or the thickness of the formed product in the form of a film, can be freely selected depending on the purpose of use. When a high concentration solution or dispersion is used as the fluorocopolymer composition, a thin film having a thick film thickness will be obtained, and when a low concentration solution or dispersion is used, a thin film having a thin film thickness will be obtained. Otherwise, a thin film having a thicker film thickness can be obtained by repeatedly carrying out the application step. The thickness of the thin film thus obtained is preferably from 0.01 µm to 1,000.0 pm, more preferably from 0.1 µm to 100.0 µm, most preferably from 0.5 µm to 50.0 µm.

Further, it is possible that the fluorocopolymer in the fluorocopolymer composition of the present invention is designed to have a crosslinking property, the composition is applied to a substrate and the solvent is removed, and then the fluorocopolymer is crosslinked and cured to form a thin film comprising a cured product of the fluorocopolymer. As the crosslinking method, any conventional method may properly be employed. For example, a method may be mentioned wherein as the fluorocopolymer incorporated in the fluorocopolymer composition, a fluorocopolymer having, in addition to repeating units based on ethylene and repeating units based on tetrafluoroethylene, repeating units based on a monomer having a crosslinkable moiety, is used, then a crosslinking agent reactive with the above crosslinkable moiety is added to the composition, a coating film is formed and the solvent is removed, and then crosslinking/curing reaction is conducted. Further, it is also possible that a fluorocopolymer having a crosslinkable moiety capable of crosslinking e.g. by light or radioactive rays is used as the fluorocopolymer to prepare a fluorocopolymer composition, a coating film is formed and the solvent is removed, followed by irradiation with e.g. light or radioactive rays for crosslinking and curing thereby to form a thin film comprising a cured product of the fluorocopolymer.

Considering the above properties such as forming properties, the fluorocopolymer composition of the present invention is applicable to an anticorrosive coating agent, a resin adhesion-inhibiting agent or an ink adhesion-inhibiting agent, as a protective coating agent or a water-repellent coating agent in an optical field or in an electrical field, such as an optical fiber cladding material, a lens, a mirror, a solar cell, an optical disk, a touch panel, a semiconductor device, a hybrid IC, a liquid crystal cell, a printed board, a photoconductor drum, a film condenser, a glass window or a film; a protective, weather-proof or stain proof coating agent in a medical field or in a chemical field, such as a syringe, a pipette, a thermometer, a beaker, a petri dish or a measuring cylinder, or for a solder mask, a solder resist, a rubber or a plastic; a protective coating agent for fibers and fabrics; an antifouling coating agent for a sealant; or an IC sealing agent.

Further, the fluorocopolymer composition of the present invention may be advantageously used as a material composition for preparation of an interlayer insulating film or a protective film in a semiconductor device or an integrated circuit apparatus. By using the fluorocopolymer composition of the present invention to such an application, it is possible to obtain a semiconductor device integrated circuit apparatus having a high response speed with a small malfunction, making use of properties of a fluororesin such as low water absorption, low dielectric constant and high heat resistance.

### EXAMPLES

Now, the present invention will be described in detail with reference to Examples.

### (Dissolution procedure)

In the following Examples and Comparative Example, the following method was carried out unless otherwise specified.

In a 10 mL pressure resistant glass reactor, an aliphatic compound containing a carbonyl group, a fluorocopolymer and a stirrer were put. The mass ratio of the fluorocopolymer to the aliphatic compound containing a carbonyl group is such that fluorocopolymer/aliphatic compound containing a carbonyl group = 1 to 10/99 to 90. The reactor was sealed and heated in a well stirred oil bath, the temperature of which was controlled.

Heating was carried out with visual observation whether the fluorocopolymer was dissolved or not. The temperature at which the content in the reactor became a transparent and uniform solution and was confirmed to be completely dissolved, was recorded. Then, the reactor was once gradually cooled, the temperature at which the solution became turbid was confirmed, the reactor was heated again, and the temperature at which a transparent and uniform solution was obtained again was regarded as the dissolution temperature.

### EXAMPLE 1

In a pressure resistant glass reactor, 100 mg of ETFE (manufactured by Asahi Glass Company, Limited, Fluon (trademark) LM-720AP, melting point: 225°C, melt index: 18.7 (297°C), hereinafter referred to as "ETFE1 ") as a fluorocopolymer, and 1.90 g of cyclohexanone were put and heated to 185°C with stirring to obtain a uniform and transparent solution. The reactor was gradually cooled, whereupon the solution became clouded at 170°C. The test tube was heated again, whereupon the solution became a uniform and transparent solution again at 180°C. The dissolution temperature of ETFE1 at a concentration of 5 mass% was considered to be 180°C. The fluorocopolymer composition obtained is the composition of the present invention.

### EXAMPLES 2 to 39

The dissolution test was carried out and a fluorocopolymer composition was obtained in the same manner as Example 1 except that the amount of ETFE1 used and the type and the amount of the aliphatic compound used were changed as illustrated in Table 1. The results of measurement of the dissolution temperature are shown in Table 1.

### EXAMPLE 40

The dissolution test was carried out and a fluorocopolymer composition was obtained in the same manner as in Example 1 except that the amount of ETFE1 used was changed to 20 mg, and 1.90 g of cyclohexanone was changed to 1.98 g of a mixed solvent of diisopropyl ketone and benzonitrile with a mass ratio of 1:1. The measurement results of the dissolution temperature are shown in Table 2.

### COMPARATIVE EXAMPLE 1

In a pressure resistant glass reactor, 20 mg of ETFE1 and 1.98 g of diisobutyl adipate were put, and heated to 200°C with stirring, but a uniform solution was not obtained though ETFE1 was swelled.

### EXAMPLE 41

The dissolution test was carried out and a fluorocopolymer composition was obtained in the same manner as in Example 1 except that the fluorocopolymer used was changed to 200 mg of ETFE (manufactured by Asahi Glass Company, Limited, Fluon (trademark) Z-8820X, melting point: 260°C, melt index: 10 (297°C), hereinafter referred to as "ETFE2"), and the amount of cyclohexanone used was changed to 1.80 g. The result of measurement of the dissolution temperature is shown in Table 2.

### EXAMPLES 42 to 55

The dissolution test was carried out and a fluorocopolymer composition was obtained in the same manner as in Example 41 except that the amount of ETFE2 used and the type and the amount of the aliphatic compound containing a carbonyl group used were changed. The result of measurement of the dissolution temperature is shown in Table 2.

**TABLE 1**

| | Fluorocopolymer | | Solvent such as the aliphatic compound containing a carbonyl group | | Polymer concentration | Dissolution temperature |
|---|---|---|---|---|---|---|
| | Type | (g) | Compound | (g) | (mass%) | (°C) |
| Ex. 1 | ETFE1 | 0.10 | Cyclohexanone | 1.90 | 5 | 180 |
| Ex. 2 | ETFE1 | 0.02 | 2-Methylcyclohexanone | 1.98 | 1 | 190 |
| Ex. 3 | ETFE1 | 0.02 | 3-Methylcyclohexanone | 1.98 | 1 | 170 |
| Ex. 4 | ETFE1 | 0.02 | 4-Ethylcyclohexanone | 1.98 | 1 | 180 |
| Ex. 5 | ETFE1 | 0.02 | 2,6-Dimethylcyclohexanone | 1.98 | 1 | 190 |
| Ex. 6* | ETFE1 | 0.20 | 3,3,5-Trimethylcyclohexanone | 1.80 | 10 | 177 |
| Ex. 7 | ETFE1 | 0.02 | 4-Tert-butylcyclohexanone | 1.98 | 1 | 180 |
| Ex. 8* | ETFE1 | 0.20 | Isophorone | 1.80 | 10 | 190 |
| Ex. 9 | ETFE1 | 0.02 | (-)-Fenchone | 1.98 | 1 | 180 |
| Ex. 10 | ETFE1 | 0.02 | 2-Hexanone | 1.98 | 1 | 170 |
| Ex. 11 | ETFE1 | 0.02 | Methyl isobutyl ketone | 1.98 | 1 | 160 |
| Ex. 12 | ETFE1 | 0.02 | 2-Heptanone | 1.98 | 1 | 155 |
| Ex. 13 | ETFE1 | 0.02 | Diisopropyl ketone | 1.98 | 1 | 160 |
| Ex. 14 | ETFE1 | 0.02 | 5-Methyl-2-hexanone | 1.98 | 1 | 150 |
| Ex. 15 | ETFE1 | 0.02 | 2-Octanone | 1.98 | 1 | 180 |
| Ex. 16 | ETFE1 | 0.02 | 2-Nonanone | 1.98 | 1 | 192 |
| Ex. 17 | ETFE1 | 0.02 | Diisobutyl ketone | 1.98 | 1 | 175 |
| Ex. 18 | ETFE1 | 0.02 | 2-Decanone | 1.98 | 1 | 195 |
| Ex. 19 | ETFE1 | 0.02 | Isopentyl formate | 1.98 | 1 | 170 |
| Ex. 20 | ETFE1 | 0.02 | Butyl acetate | 1.98 | 1 | 165 |
| Ex. 21 | ETFE1 | 0.02 | Isobutyl acetate | 1.98 | 1 | 170 |
| Ex.22 | ETFE1 | 0.02 | Pentyl acetate | 1.98 | 1 | 180 |
| Ex. 23 | ETFE1 | 0.02 | Isopentyl acetate | 1.98 | 1 | 170 |
| Ex. 24 | ETFE1 | 0.02 | Hexyl acetate | 1.98 | 1 | 180 |
| Ex. 25 | ETFE1 | 0.02 | Cyclohexyl acetate | 1.98 | 1 | 180 |
| Ex. 26 | ETFE1 | 0.02 | 2-Ethylhexyl acetate | 1.98 | 1 | 190 |
| Ex. 27 | ETFE1 | 0.02 | Ethyl butyrate | 1.98 | 1 | 170 |
| Ex. 28 | ETFE1 | 0.02 | Butyl butyrate | 1.98 | 1 | 180 |
| Ex. 29 | ETFE1 | 0.02 | Pentyl butyrate | 1.98 | 1 | 195 |
| Ex. 30 | ETFE1 | 0.02 | Methyl cyclohexanecarboxylate | 1.98 | 1 | 195 |
| Ex. 31 | ETFE1 | 0.02 | 2,2,2-Trifluoroethyl cyclohexanecarboxylate | 1.98 | 1 | 160 |
| Ex. 32 | ETFE1 | 0.02 | Ethyl perfluoroheptanoate | 1.98 | 1 | 190 |
| Ex. 33 | ETFE1 | 0.02 | 2-Ethoxyethyl acetate | 1.98 | 1 | 195 |
| Ex. 34 | ETFE1 | 0.02 | 2-Butoxyethyl acetate | 1.98 | 1 | 190 |
| Ex. 35 | ETFE1 | 0.02 | 1-Methoxy-2-acetoxypropane | 1.98 | 1 | 180 |
| Ex. 36 | ETFE1 | 0.02 | 1-Ethoxy-2-acetoxypropane | 1.98 | 1 | 180 |
| Ex. 37 | ETFE1 | 0.02 | 3-Methoxybutyl acetate | 1.98 | 1 | 180 |
| Ex. 38 | ETFE1 | 0.02 | 3-Methoxy-3-methylbutyl acetate | 1.98 | 1 | 180 |
| Ex. 39 | ETFE1 | 0.02 | Bis(2,2,3,3-tetrafluoropropyl)carbonate | 1.98 | 1 | 190 |

| | | | | | | |
|---|---|---|---|---|---|---|
| * Not according to the invention | | | | | | |

**TABLE 2**

| | Fluorocopolymer | | Solvent such as the aliphatic compound containing a carbonyl group | | Polymer concentration (mass%) | Dissolution temperature (°C) |
|---|---|---|---|---|---|---|
| | Type | (g) | Compound | (g) | | |
| Ex. 40 | ETFE1 | 0.02 | Diisopropyl ketone/benzonitrile (1:1 (wt/wt)) | 1.98 | 1 | 180 |
| Ex. 41* | ETFE2 | 0.20 | Cyclohexanone | 1.80 | 10 | 195 |
| Ex. 42* | ETFE2 | 0.20 | 3,3,5-Trimethylcyclohexanone | 1.80 | 10 | 203 |
| Ex. 43* | ETFE2 | 0.20 | Isophorone | 1.80 | 10 | 206 |
| Ex. 44* | ETFE2 | 0.20 | 2-Hexanone | 1.80 | 10 | 202 |
| Ex. 45* | ETFE2 | 0.18 | Methyl isobutyl ketone | 1.82 | 9 | 210 |
| Ex. 46* | ETFE2 | 0.20 | 2-Heptanone | 1.80 | 10 | 214 |
| Ex. 47* | ETFE2 | 0.20 | Diisopropyl ketone | 1.80 | 10 | 200 |
| Ex. 48* | ETFE2 | 0.20 | 2-Octanone | 1.80 | 10 | 210 |
| Ex. 49* | ETFE2 | 0.20 | Diisobutyl ketone | 1.80 | 10 | 210 |
| Ex. 50 | ETFE2 | 0.06 | Butyl acetate | 1.94 | 3 | 200 |
| Ex. 51 | ETFE2 | 0.10 | Isopentyl acetate | 1.90 | 5 | 197 |
| Ex. 52* | ETFE2 | 0.20 | 2-Ethylhexyl acetate | 1.80 | 10 | 215 |
| Ex. 53 | ETFE2 | 0.02 | Octyl acetate | 1.98 | 1 | 215 |
| Ex. 54 | ETFE2 | 0.10 | 1-Methoxy-2-acetoxypropane | 1.90 | 5 | 205 |
| Ex. 55* | ETFE2 | 0.20 | 3-Methoxy-3-methylbutyl acetate | 1.80 | 10 | 210 |

| | | | | | | |
|---|---|---|---|---|---|---|
| * Not according to the invention | | | | | | |

In Tables 1 and 2, the "polymer concentration" means the concentration of the fluorocopolymer.

Now, examples of application of the fluorocopolymer composition of the present invention to formation of a thin film by coating will be described below.

### APPLICATION EXAMPLE 1

In a 50 mL pressure resistant glass reactor, 150 mg of ETFE1 and 15 g of isobutyl acetate were put and heated to 170°C with stirring, whereupon a solution was obtained. The reactor containing such a solution was taken out from the oil bath, and stirring was continued, whereupon a clouded suspension was obtained. This suspension was applied on a 7 cm square glass plate at room temperature and heated on a hot plate heated to 50°C for one hour to evaporate the solvent. Then, the hot plate was turned off for cooling, thereby to form a ETFE1 thin film on the hot plate.

The surface of the resulting ETFE1 thin film was observed by a scanning electron microscope, and the thin film was confirmed to be a porous-structured formed product. The film thickness was measured by Digimatic Indicator ID-C112 (manufactured by Mitsutoyo Corporation), and it was found to be 10 µm. Further, contact angles of the surface of the resulting ETFE1 thin film to water and normal hexadecane were measured by using automatic contact angle meter DM500 (manufactured by Kyowa Interface Science Co., Ltd.), and they were respectively 126.5° and 53.3°. It is found that such an ETFE1 thin film was excellent in water repellency and oil repellency.

### INDUSTRIAL APPLICABILITY

With the fluorocopolymer composition of the present invention, a thin film can easily be obtained by coating, and the composition is suitable for application e.g. to surface treatment which requires heat resistance, flame retardancy, chemical resistance, weather resistance, low friction property, low dielectric properties, transparency, etc.

## Claims

1. A fluorocopolymer composition which comprises 1 to 5 mass% of a fluorocopolymer having repeating units based on ethylene and repeating units based on tetrafluoroethylene and 95 to 99 mass% of a C₆₋₁₀ aliphatic compound having one carbonyl group, and has a temperature range within which the composition is in a solution state, the temperature being at least at a temperature of at most the melting point of the fluorocopolymer.

2. The fluorocopolymer composition according to Claim 1, wherein the aliphatic compound has a boiling point of at least 50°C and at most 230°C.

3. The fluorocopolymer composition according to Claim 1 or 2, wherein the dissolution temperature being the lower limit temperature in the temperature range within which the composition is in a solution state, is at most 230°C.

4. The fluorocopolymer composition according to any one of Claims 1 to 3, wherein the aliphatic compound is at least one member selected from the group consisting of a ketone, an ester and a carbonate.

5. The fluorocopolymer composition according to Claim 4, wherein the aliphatic compound is a cyclic ketone.

6. The fluorocopolymer composition according to any one of Claims 1 to 5, wherein in the temperature range within which the composition is in a solution state, the vapor pressure of the solution is at least within a range of at most autogenous pressure, wherein the autogenous pressure means a pressure which a mixture of the aliphatic compound containing a carbonyl group and the fluorocopolymer spontaneously shows in a closed vessel.

7. The fluorocopolymer composition according to Claim 6, wherein the vapor pressure of the solution is at least within a range of at most 3 MPa.

8. The fluorocopolymer composition according to Claim 6, wherein the vapor pressure of the solution is at most normal pressure.

9. The fluorocopolymer composition according to any one of Claims 1 to 8, which further contains an organic solvent other than the aliphatic compound.

10. The fluorocopolymer composition according to any one of Claims 1 to 9, wherein the fluorocopolymer has a molar ratio of repeating units based on tetrafluoroethylene/ repeating units based on ethylene being from 70/30 to 30/70.

11. A process for producing the fluorocopolymer composition as defined in any one of Claims 1 to 10, which comprises a step of dissolving the fluorocopolymer having repeating units based on ethylene and repeating units based on tetrafluoroethylene, in the aliphatic compound or a mixed solvent containing the aliphatic compound, at a temperature of at most the melting point of the fluorocopolymer.

12. The process for producing the fluorocopolymer composition according to Claim 11, wherein the temperature is a temperature lower by at least 30°C than the melting point of the fluorocopolymer.

## Patentansprüche

1. Fluorcopolymerzusammensetzung, welche 1 bis 5 Massen% eines Fluorcopolymers, aufweisend sich wiederholende Einheiten basierend auf Ethylen und sich wiederholenden Einheiten basierend auf Tetrafluorethylen, und 95 bis 99 Massen% einer C₆₋₁₀ aliphatischen Verbindung, aufweisend eine Carbonylgruppe, umfasst und einen Temperaturbereich aufweist, in welchem die Zusammensetzung in einem Lösungszustand ist, wobei die Temperatur mindestens bei einer Temperatur von höchstens dem Schmelzpunkt des Fluorcopolymers ist.

2. Fluorcopolymerzusammensetzung nach Anspruch 1, wobei die aliphatische Verbindung einen Siedepunkt von mindestens 50°C und höchstens 230°C aufweist.

3. Fluorcopolymerzusammensetzung nach Anspruch 1 oder 2, wobei die Lösungstemperatur, welche die untere Grenztemperatur in dem Temperaturbereich ist, in welchem die Zusammensetzung in einem Lösungszustand ist, höchstens 230°C ist.

4. Fluorcopolymerzusammensetzung nach einem der Ansprüche 1 bis 3, wobei die aliphatische Verbindung mindestens ein Mitglied, ausgewählt aus der Gruppe, bestehend aus einem Keton, einem Ester und einem Carbonat, ist.

5. Fluorcopolymerzusammensetzung nach Anspruch 4, wobei die aliphatische Verbindung ein cyclisches Keton ist.

6. Fluorcopolymerzusammensetzung nach einem der Ansprüche 1 bis 5, wobei in dem Temperaturbereich, in welchem die Zusammensetzung in einem Lösungszustand ist, der Dampfdruck der Lösung mindestens innerhalb eines Bereiches von höchstens Autogendruck ist, wobei der Autogendruck einen Druck bedeutet, welchen eine Mischung der aliphatischen Verbindung, enthaltend eine Carbonylgruppe, und das Fluorocopolymer spontan in einem geschlossenen Behälter zeigen.

7. Fluorcopolymerzusammensetzung nach Anspruch 6, wobei der Dampfdruck der Lösung mindestens innerhalb eines Bereiches von höchstens 3 MPa beträgt.

8. Fluorcopolymerzusammensetzung nach Anspruch 6, wobei der Dampfdruck der Lösung höchstens Normaldruck beträgt.

9. Fluorcopolymerzusammensetzung nach einem der Ansprüche 1 bis 8, welche weiter ein anderes organisches Lösungsmittel als die aliphatische Verbindung enthält.

10. Fluorcopolymerzusammensetzung nach einem der Ansprüche 1 bis 9, wobei das Fluorcopolymer ein molares Verhältnis von sich wiederholenden Einheiten basierend auf Tetrafluorethylen/sich wiederholenden Einheiten basierend auf Ethylen aufweist, welches von 70/30 bis 30/70 ist.

11. Verfahren zur Herstellung der Fluorcopolymerzusammensetzung nach einem der Ansprüche 1 bis 10, welches einen Schritt des Lösens des Fluorcopolymers, aufweisend sich wiederholende Einheiten basierend auf Ethylen und sich wiederholenden Einheiten basierend auf Tetrafluorethylen, in der aliphatischen Verbindung oder einem gemischten Lösungsmittel, welches die aliphatische Verbindung enthält, bei einer Temperatur von höchstens dem Schmelzpunkt des Fluorcopolymers.

12. Verfahren zur Herstellung der Fluorcopolymerzusammensetzung nach Anspruch 11, wobei die Temperatur eine Temperatur um mindestens 30°C niedriger als die Schmelztemperatur des Fluorcopolymers ist.

## Revendications

1. Composition de copolymère fluoré qui comprend 1 à 5 % en masse d'un copolymère fluoré ayant des motifs répétitifs à base d'éthylène et des motifs répétitifs à base de tétrafluoroéthylène, et 95 à 99 % en masse d'un composé aliphatique en C₆ à C₁₀ possédant un seul groupe carbonyle, et qui a une plage de températures à l'intérieur de laquelle la composition est dans un état en solution, la température étant au moins une température correspondant au plus au point de fusion du copolymère fluoré.

2. Composition de copolymère fluoré selon la revendication 1, dans laquelle le composé aliphatique a un point d'ébullition d'au moins 50°C et d'au plus 230°C.

3. Composition de copolymère fluoré selon la revendication 1 ou 2, dans laquelle la température de dissolution, qui est la température limite inférieure de la plage de températures à l'intérieur de laquelle la composition est dans un état en solution, est d'au plus 230°C.

4. Composition de copolymère fluoré selon l'une quelconque des revendications 1 à 3, dans laquelle le composé aliphatique est au moins un membre choisi dans l'ensemble constitué par une cétone, un ester et un carbonate.

5. Composition de copolymère fluoré selon la revendication 4, dans laquelle le composé aliphatique est une cétone cyclique.

6. Composition de copolymère fluoré selon l'une quelconque des revendications 1 à 5, dans laquelle, dans la plage de température à l'intérieur de laquelle la composition est dans un état en solution, la pression de vapeur de la solution est au moins située dans la plage allant au plus jusqu'à la pression autogène, où la pression autogène signifie une pression que présente spontanément un mélange du composé aliphatique contenant un groupe carbonyle et le copolymère fluoré dans un récipient fermé.

7. Composition de copolymère fluoré selon la revendication 6, dans laquelle la pression de vapeur de la solution est au moins située dans la plage allant jusqu'à 3 MPa au plus.

8. Composition de copolymère fluoré selon la revendication 6, dans laquelle la pression de vapeur de la solution est au plus la pression normale.

9. Composition de copolymère fluoré selon l'une quelconque des revendications 1 à 8, qui contient en outre un solvant organique autre que le composé aliphatique.

10. Composition de copolymère fluoré selon l'une quelconque des revendications 1 à 9, dans laquelle le copolymère fluoré a un rapport molaire des motifs répétitifs à base de tétrafluoroéthylène sur les motifs répétitifs à base d'éthylène qui est de 70/30 à 30/70.

11. Procédé pour produire la composition de copolymère fluoré telle que définie dans l'une quelconque des revendications 1 à 10, qui comprend une étape de dissolution du copolymère fluoré ayant des motifs répétitifs à base d'éthylène et des motifs répétitifs à base de tétrafluoroéthylène, dans le composé aliphatique ou un mélange solvant contenant le composé aliphatique, à une température qui est au plus le point de fusion du copolymère fluoré.

12. Procédé pour produire la composition de copolymère fluoré selon la revendication 11, dans lequel la température est une température inférieure d'au moins 30°C au point de fusion du copolymère fluoré.
